Europäisches Patentamt

European Patent Office

Office européen des brevets

(19)

(11) Veröffentlichungsnummer : **0 380 917 B1**

(12) **EUROPÄISCHE PATENTSCHRIFT**

(45) Veröffentlichungstag der Patentschrift :
**02.09.92 Patentblatt 92/36**

(51) Int. Cl.⁵ : **F01P 7/04, F01P 11/00**

(21) Anmeldenummer : **90100204.8**

(22) Anmeldetag : **05.01.90**

(54) **Kühleranordnung, insbesondere zur Motorkühlung von Nutzfahrzeugen.**

(30) Priorität : **03.02.89 DE 3903199**

(43) Veröffentlichungstag der Anmeldung :
**08.08.90 Patentblatt 90/32**

(45) Bekanntmachung des Hinweises auf die
Patenterteilung :
**02.09.92 Patentblatt 92/36**

(84) Benannte Vertragsstaaten :
**DE ES FR GB IT SE**

(56) Entgegenhaltungen :
**EP-A- 0 004 448
FR-A- 2 208 449
GB-A- 2 059 639
PATENT ABSTRACTS OF JAPAN vol. 10, no.
14 (M-447)(2071) 21 Januar 1986, & JP-A-60
175729**

(73) Patentinhaber : **Behr GmbH & Co.
Mauserstrasse 3
W-7000 Stuttgart 30 (DE)**

(72) Erfinder : **Klaucke, Thomas
Malmsheimer Strasse 20
W-7253 Renningen (DE)**
Erfinder : **Ochaba, Hermann
Hausweinberg 39
W-7050 Waiblingen 5 (DE)**

(74) Vertreter : **Wilhelm & Dauster Patentanwälte
European Patent Attorneys
Hospitalstrasse 8
W-7000 Stuttgart 1 (DE)**

## Beschreibung

Die Erfindung betrifft eine Kühleranordnung nach dem Oberbegriff des Patentanspruches 1.

Kühleranordnungen dieser Art sind bekannt (DE-A-3 714 842). Bei den bekannten Bauarten wird der elektrische Regler, der zum Fahrzeug gehört, stets nachträglich mit Wärmetauscher und Lüfterantrieb verbunden, wobei auch die entsprechenden Temperaturfühler erst mit dem Anschluß des Reglers eingebaut werden. Bei Fahrzeugen, die mit einer Kühleranordnung nach dem Oberbegriff des Patentanspruches 1 versehen sind, befindet sich der Regler im allgemeinen in einem außerhalb des Motorraumes liegenden Bereich, beispielsweise im Fahrerhaus. Nachteilig ist daher bei solchen Bauarten, daß die Abstimmung der gewünschten Regelcharakteristik und die dafür notwendige Justierung des Reglers und eventueller anderer Bestandteile der Regelanlage erst nach dem Einbau des Kühlers beim Kunden vorgenommen werden kann. Dies ist relativ aufwendig und führt vor allen Dingen nicht immer zur Einstellung der gewünschten Regelcharakteristiken des Kühlers.

Der Erfindung liegt die Aufgabe zugrunde, eine Kühleranordnung der eingangs genannten Art so auszubilden, daß auch die spätere Funktionsweise des Kühlers schon vom Kühlerhersteller bestimmbar ist. Zur Lösung dieser Aufgabe werden bei einer Kühleranordnung der eingangs genannten Art die kennzeichnenden Merkmale des Patentanspruches 1 vorgesehen. Durch diese Ausgestaltung wird der Regler mit allen seinen Anschlußleitungen und Temperaturfühlern Teil der aus dem Lüfter und dem Wärmetauscher bestehenden vormontierbaren Baueinheit. Die gesamte Kühleranordnung kann daher noch vor ihrer Auslieferung einjustiert werden. Es wird lediglich noch der elektrische Anschluß des Reglers oder dessen Verbindung mit zusätzlichen Fühlern nötig, was aber in einfacher Weise durch die Anordnung von Steckelementen montagefreundlich gelöst werden kann.

Vorteilhafte Weiterbildungen sind in den Unteransprüchen gekennzeichnet, wobei die Merkmale der Ansprüche 2 und 3 den Vorteil mit sich bringen, daß zwischen dem Regler und dem, dem Kühlkreislauf des Wärmetauschers zugeordneten Temperarurfühler, keine Verbindungsleitungen vorliegen, die äußeren Einflüssen unterworfen werden können. Regler und Temperaturfühler bilden eine einschraubbare Baueinheit, die in einfacher Weise mit Anschlußkabeln zu zusätzlichen Signalgebern bzw.zum Stromanschluß führen kann.

Die Merkmale der Ansprüche 4 bis 7 bringen den Vorteil mit sich, daß die vormontierte Kühleranordnung sowohl zur Regelung der Kühlwassertemperatur als auch zur Regelung anderer Größen, beispielsweise der Lufttemperatur der Ladeluft, mit herangezogen werden kann. Der Regler kann zu diesem Zweck entsprechende Kennlinien für Wasser- bzw. Lufttemperaturen verwirklichen. Schließlich wird auch noch der Vorteil der unmittelbaren und bestimmbaren Zuordnung der Lüfterdrehzahl zu bestimmten Kühlwassertemperaturen oder Außentemperaturen erreicht, wenn nach den Merkmalen des Anspruches 6 und 7 die Drehzahl des Lüfters unmittelbar überwacht wird. Eine relativ aufwendige Regeleinrichtung kann somit der Kühlerbaueinheit von Haus aus integriert werden. Sie kann beim Hersteller entsprechend ausgelegt werden, so daß bei der Montage eine umständliche Einjustierung der Regelanlage überflüssig wird.

In der Zeichnung ist die Erfindung anhand eines Ausführungsbei spieles dargestellt und wird im folgenden beschrieben. Es zeigen:

Fig. 1 eine Frontansicht eines Nutzfahrzeugkühlers, der erfindungsgemäß ausgestattet ist,

Fig. 2 die Draufsicht auf den Kühler der Fig. 1,

Fig. 3 die Seitenansicht des Kühlers der Fig. 1 und 2,

Fig. 4 eine vergrößerte Teildarstellung des beim Kühler der Fig. 1 bis 3 verwendeten Reglers in Draufsicht und

Fig. 5 die Seitenansicht des Reglers der Fig. 4.

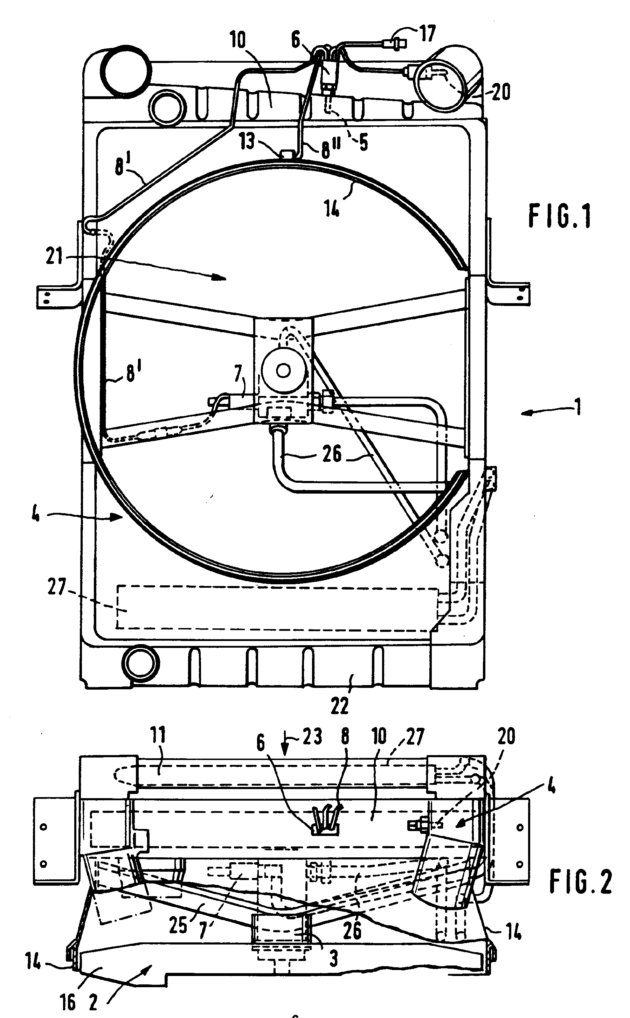

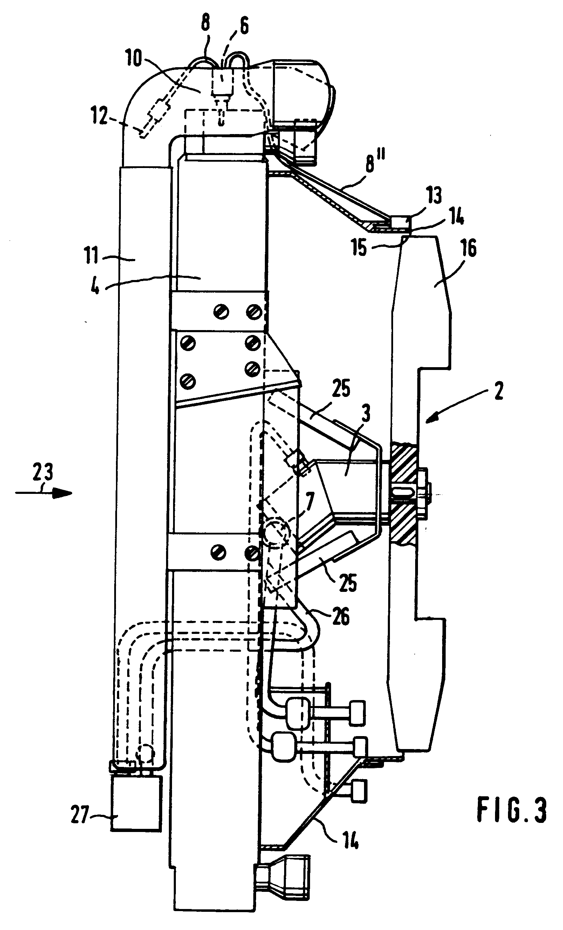

In den Fig. 1 bis 3 ist eine Kühleranordnung in der Form einer Baueinheit (1) gezeigt, die aus einem bekannten Wärmetauscher (4) mit einem nicht näher gezeigten Rippenrohrblock (21) mit einem oberen Wasserkasten (10) und einem unteren Wasserkasten (22) sowie aus einer diesem Wärmetauscher (4) in der Richtung (23) der strömenden Luft nachgeschalteten Lüfteranordnung (2) besteht. Die Lüfteranordnung (2) ist im einzelnen ebenfalls in bekannter Weise aufgebaut. Es ist ein mit Lüfterschaufeln (16) bestückter Lüfter (2) vorgesehen,der über einen hydrostatischen Lüfterantrieb (3) in seiner Drehzahl regelbar ist. Dabei wird die Antriebsgeschwindigkeit über ein Stellglied (7) in der Form eines Steuerventiles bestimmt, das die Zufuhr von Hydraulikmittel zum Lüfterantrieb (3) in Abhängigkeit von der Temperatur des Kühlwassers im Wärmetauscher (4) steuert.

Die Lüfteranordnung (2) ist über eine Lüfterzarge (14) fest mit einem Rahmen des Wärmetauschers (4) verbunden. Der Lüfterantrieb (3) ist ebenfalls am Rahmen des Wärmetauschers (4) mit Hilfe von Abstützarmen (25) gehalten. Über hydraulische Leitungen (26), die in nicht näher dargestellter Weise mit einem Hydraulikmittelspeicher und mit einer Pumpe verbunden sind, im übrigen auch zu einem Ölkühler (27) führen, steht der Lüfterantrieb (3) mit einem Hydraulikkreislauf in Verbindung. Die Zufuhr des Hydraulikmittels, wird, wie bereits ausgeführt, über ein als Steuerventeil ausgebildetes Stellglied (7) bestimmt.

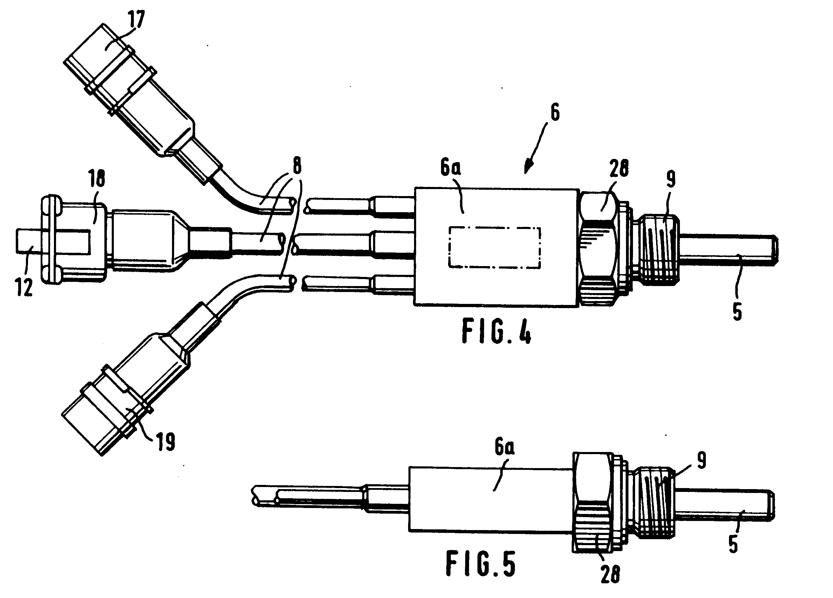

Fest mit dem oberen Wasserkasten (10) des Wärmetauschers (4) verbunden ist ein Regler (6), der im einzelnen in den Fig. 4 und 5 dargestellt ist. Der elektrische Regler (6) besitzt ein Gehäuse (6a), in dem die notwendigen elektrischen Steuerkreise, z.B. in Form von Steckkarten o.dgl. enthalten sind. Das Gehäuse kann mit Hilfe eines Sechskantes (28) und eines Gewindes (9) in eine entsprechende Öffnung im Wasserkasten (10) eingeführt werden, so daß der Regler (6) fest mit dem Wasserkasten (10) und mit dem Wärmetauscher (4) verbunden ist. Beim Ausführungsbeispiel ist in den Regler (6) ein Temperaturfühler (5) integriert, der von dem Gewinde (9) umgeben wird und daher beim Einschrauben des Reglergehäuses (6a) in den Wasserkasten (6) in den Wasserkreislauf des Wärmetauschers (4) eintaucht. Die Temperatur des Kühlwassers im Wärmetauscher (4) wird daher unmittelbar durch den eingeschraubten Regler (6) gemessen, der über elektrische Verbindungsleitungen (8), die unmittelbar am Gehäuse (6a) angebracht sind, auch noch mit weiteren Signalgebern verbindbar ist. Beim Ausführungsbeispiel, bei dem dem Wärmetauscher (4) weitere Wärmetauscher (11) in der Form eines Ladeluftkühlers vorgeschaltet ist, ist ein Temperaturfühler (20) vorgesehen, der in den Austrittsstutzen des Ladeluftkühlers hereinragt, die Temperatur der Ladeluft mißt und der über ein Anschlußteil (18) unmittelbar mit der zugeordneten Leitung (8) und mit dem Regler (6) in Verbindung steht. Weitere Verbindungsleitungen (8) führen zu einem Stecker (17) für den Stromanschluß des Reglers und zu einem Stecker (19), der zu einer Verbindungsleitung (8') zum Stellglied (7) führt. Möglich wäre es auch, das Stellglied (7) unmittelbar über die Verbindungsleitung (8) mit dem Regler (6) zu verbinden.

In den Fig. 4 und 5 ist eine weitere Anschlußleitung zum Regler (6) nicht dargestellt. Der Regler (6) steht nämlich über eine elektrische Verbindungsleitung (8'') mit einem Signalgeber (13) in der Form eines Impulszählers in Verbindung, der fest an der Zarge (14) des Lüfters (2) im Bereich des umlaufenden Belüfters angeordnet ist. Einer der Lüfterschaufeln (16) ist zudem ein magnetisch wirkendes Teil (15), beispielsweise ein kleiner Permanentmagnet oder auch eine Eisenplatte zugeordnet, die bei der Drehung des Lüfters (2) in bestimmten Abständen am Impulszähler (13) vorbeiläuft und so eine exakte Drehzahlermittlung des Lüfters (2) erlaubt, die im Regler wiederum zu einer Abstimmung der gewünschten Regelcharakteristiken ausgenützt werden kann. Die Lüfterschaufeln (16) laufen, ebenfalls in bekannter Weise, innerhalb der als Lüfterummantelung dienenden Zarge (14) um, in deren Bereich der Impulszähler (13) angebracht ist.

Durch den Einsatz des Impulszählers (13) und seinen Anschluß an den Regler liegen Daten über die tatsächliche Drehzahl des Lüfters vor. Trotzdem ist der Regler (6), wie ausgeführt, mit allen seinen Anschlußleitungen (8, 8',8'') und weiteren Signalgebern in der Form von Temperaturfühlern (20) oder auch eines zusätzlichen Außentemperaturfühlers (12) sowie des Impulsgebers (13) Teil der Baueinheit (1) des gesamten Kühleraggregates, das in das Fahrzeug nur noch eingesetzt zu werden braucht. Der elektrische Anschluß des Reglers (6) kann über den Stecker (17) erfolgen. Weitere Montage- oder Justierarbeiten sind nicht notwendig.

## Patentansprüche

1. Kühleranordnung zur Motorkühlung, insbesondere von Nutzfahrzeugen, bestehend aus einem Lüfter (2) mit hydrostatischem Antrieb (3), mindestens einem diesem vorgeschalteten, vom Motorkühlwasser und von der vom Lüfter angesaugten Luft durchströmten Wärmetauscher (4) mit einem dem Wasserkreislauf zugeordneten Temperaturfühler (5) sowie mit einem mit einem Gehäuse (6a), versehenen elektrischen Regler (6), der die vom Temperaturfühler (5) abgegebenen Signale verarbeitet und ein Stellglied (7) zur Steuerung des hydrostatischen Antriebes (3) entsprechend der vom Temperaturfühler (5) ermittelten Temperatur beaufschlagt, wobei der Wärmetauscher und die Lüfteranordnung mittels Abstützarmen (25), die den Lüfter am Rahmen des Wärmetauschers befestigen, zu einer Baueinheit (1) zusammengefaßt sind, dadurch gekennzeichnet, daß der Regler (6) und der Temperaturfühler (5) einschließlich aller ihrer Verbindungsleitungen (8) unmittelbar an der Baueinheit (1) befestigt und Teil dieser Baueinheit (1) sind, und daß mindestens die vom Regler ausgehende Verbindungsleitung zu anderen Teilen des Nutzfahrzeuges mit enem Steckelement (17) versehen ist, um eine Schnellverbindung der Baueinheit zu ermöglichen.

2. Kühleranordnung nach Anspruch 1, dadurch gekennzeichnet, daß das Gehäuse (6a) des Reglers am Wärmetauscher (4) befestigt ist.

3. Kühleranordnung nach Anspruch 2, dadurch gekennzeichnet, daß das Gehäuse (6a) mit enem den Temperaturfühler (5) umgebenden Gewinde (9) in eine Öffnung des Wasserkastens (10) des Wärmetauscher (4) eingesetzt ist.

4. Kühleranordnung nach Anspruch 1 oder 2 und 3 mit mindestens einem zusätzlichen Wärmetauscher (11), insbesondere in der Form eines Ladeluftkühlers, dadurch gekennzeichnet, daß ein dem zusätzlichen Wärmetauscher zugeordneten Signalgeber (20) insbesondere ein Temperaturfühler vorgesehen ist, der im Strömungsweg der Ladeluft angeordnet und mit dem Regler (6) fest verkabelt ist.

5. Kühleranordnung nach einem der Ansprüche 1 bis 4, dadurch gekennzeichnet, daß ein Außentemperaturfühler (12) vorgesehen ist, der die Temperatur der in die Baueinheit eintretenden Kühlluft erfaßt und mit dem Regler (6) verbunden ist.

6. Kühleranordnung nach Anspruch 1, dadurch gekennzeichnet, daß dem Lüfter (2) ein dessen Drehzahl messender Signalgeber (13) zugeordnet ist, der mit dem Regler (6) verbunden ist.

7. Kühleranordnung nach Anspruch 6, dadurch gekennzeichnet, daß als Signalgeber ein Impulszähler (13) vorgesehen ist, der im Bereich der Lüfterummantelung (14) angeordnet ist und mit einem magnetisch wirkenden Teil (15) in einem der Lüfterblätter (16) zusammenwirkt.

8. Kühleranordnung nach den Ansprüchen 2 bis 7, dadurch gekennzeichnet, daß alle Signalgeber (5, 12, 13, 20) fest oder durch Zwischenfügen von Steckern (17, 18, 19) mit dem Regler (6) verkabelt sind.


**Revendications**

1. Bloc de radiateur destiné au refroidissement d'un moteur, en particulier de celui de véhicules utilitaires, se composant d'un ventilateur (2) à entrainement hydrostatique (3), d'au moins d'un échangeur de chaleur (4) monté en aval de ce dernier, balayé par l'eau de refroidissement du moteur et par l'air aspiré par le ventilateur et équipé d'un détecteur (5) de la température du circuit d'eau ainsi que d'un régulateur électrique (6) comportant un boîtier (6a), traitant les signaux transmis par le détecteur de température (5) et régulant un organe réglant (7) de commande de l'entrainement hydrostatique (3) en fonction de la température déterminée par le détecteur de température (5), l'échangeur de chaleur et l'ensemble du ventilateur étant assemblés en un module (1) au moyen de bras de support (25) qui fixent le ventilateur sur le cadre de l'échangeur de chaleur, caractérisé en ce que le régulateur (6) et le détecteur de température (5) ainsi que tous leurs conducteurs de connexion (8) sont fixés directement au module (1) et font partie de ce module (1) et en ce qu'au moins les conducteurs de connexion partant du régulateur et aboutissant à d'autres parties du véhicule utilitaire sont munis d'un élément d'enfichage (17) afin de permettre un raccord rapide du module.

2. Bloc de radiateur selon la revendication 1, caractérisé en ce que le boitier (6a) du régulateur est fixé à l'échangeur de chaleur (4).

3. Bloc de radiateur selon la revendication 2, caractérisé en ce que le boitier (6a) est installé dans un trou de la boîte à eau (10) de l'échangeur de chaleur (4) à l'aide d'un filetage (9) entourant le détecteur de température (5).

4. Bloc de radiateur selon les revendications 1 ou 2 et 3, comprenant au moins un échangeur de chaleur auxiliaire (11), en particulier sous la forme d'un radiateur d'air de suralimentation, caractérisé en ce qu'un générateur de signaux (20), en particulier un détecteur de température associé à l'échangeur de chaleur auxiliaire est disposé dans le trajet de circulation de l'air de suralimentation et câblé à demeure avec le régulateur (6).

5. Bloc de radiateur selon l'une des revendications 1 à 4, caractérisé en ce qu'un détecteur (12) de la température ambiante est prévu pour détecter la température de l'air de refroidissement entrant dans le module et il est connecté au régulateur (6).

6. Bloc de radiateur selon la revendication 1, caractérisé en ce qu'un générateur de signaux (13) qui est associé au ventilateur (2) et qui en mesure la vitesse de rotation est connecté au régulateur (6).

7. Bloc de radiateur selon la revendication 6, caractérisé en ce qu'un compteur d'impulsions (13) est prévu pour constituer un générateur de signaux, il est disposé à proximité de l'enveloppe (14) du ventilateur et il coopère avec une pièce (15) ayant une action magnétique et disposée dans l'une des pales (16) du ventilateur.

**8.** Bloc de radiateur selon les revendications 2 à 7, caractérisé en ce que tous les générateurs de signaux (5, 12, 13, 20) sont câblés à demeure avec le régulateur (6) ou le sont avec interposition de fiches (17, 18, 19).

**Claims**

**1.** A radiator arrangement for engine cooling, particularly of utility vehicles, consisting of a fan (2) with a hydrostatic drive (3), upstream of this at least one heat exchanger (4) through which the engine cooling water and the air drawn in from the fan flow, with a temperature sensor (5) associated with the water circuit and with an electrically operated regulator (6) provided with a housing (6a) and which processes the signals indicated by the temperature sensor (5) and which acts upon a positioning member (7) for controlling the hydrostatic drive (3) in accordance with the temperature ascertained by the temperature sensor (5), the heat exchanger and the fan arrangement being assembled into one structural unit (1) by means of supporting arms (25) which mount the fan on the frame of the heat exchanger, characterised in that the regulator (6) and the temperature sensor (5) including all their connecting lines (8) are mounted directly on and form part of the structural unit (1) and in that at least the connecting line emanating from the regulator and passing to other parts of the utility vehicle is provided with a plug-in element (17) to permit of rapid connection of the structural unit.

**2.** A radiator arrangement according to claim 1, characterised in that the housing (6a) of the regulator is mounted on the heat exchanger (4).

**3.** A radiator arrangement according to claim 2, characterised in that the housing (6a) is inserted into an aperture in the water tank (10) of the heat exchanger (4) by means of a screw thread (9) surrounding the temperature sensor (5).

**4.** A radiator arrangement according to claim 1 or 2 and 3 with at least one additional heat exchanger (11), particularly in the form of a charging air cooler, characterised in that a signal transmitter (20) associated with the additional heat exchanger and being in particular a temperature sensor is provided which is disposed in the flow path of the charging air and is permanently wired to the regulator (6).

**5.** A radiator arrangement according to one of claims 1 to 4, characterised in that an outside temperature sensor (12) is provided which ascertains the temperature of the cooling air entering the structural unit and is connected to the regulator (6).

**6.** A radiator arrangement according to claim 1, characterised in that there is associated with the fan (2) a signal transmitter (13) which measures its rotary speed and which is connected to the regulator (6).

**7.** A radiator arrangement according to claim 6, characterised in that provided as a signal transmitter is a pulse counter (13) which is disposed in the region of the fan casing (14) and which co-operates with a magnetically acting part (15) in one of the fan blades (16).

**8.** A radiator arrangement according to claims 2 to 7, characterised in that all signal transmitters (5, 12, 13, 20) are connected to the regulator (6) rigidly or by the interposition of plugs (17, 18, 19).

FIG.1

FIG.2

FIG.3

FIG.4

FIG.5